# EUROPEAN PATENT APPLICATION

(11) **EP 4 099 711 A1**
(43) Date of publication of application: **07.12.2022**
(21) Application number: 22157061.7
(22) Date of filing: 16.02.2022
(51) Int. Cl.: H04N 21/488, H04N 21/24, H04N 21/43, H04N 21/431, H04N 7/025, H04N 21/845, H04N 21/8547, G11B 27/02

(54) **METHOD AND APPARATUS AND STORAGE MEDIUM FOR PROCESSING VIDEO AND TIMING OF SUBTITLES**

(30) Priority: 31.05.2021 CN 202110600658
(71) Applicant: Beijing Dajia Internet Information Technology Co., Ltd., Beijing 100085 (CN)
(72) Inventor: Zhang, Gan, Beijing, 100085 (CN); Yin, Wenhao, Beijing, 100085 (CN); Ye, Xiaoyu, Beijing, 100085 (CN)
(74) Representative: Angerhausen, Christoph

(57) **Abstract**

The disclosure can provide a method and an apparatus for processing a video. The method for processing a video includes: displaying a video processing page including an editing region of a target template video, the editing region for displaying at least one video element of the target template video; obtaining associated object information of at least one associated object of a target video element corresponding to an object association instruction in response to the object association instruction triggered based on any video element; generating a target video based on the target template video in response to a video generation instruction, and establishing association information between the associated object information and the target video.

## Description

### FIELD

The disclosure relates to the field of computer vision techniques, and more particularly, to a method for processing a video, a method for playing a video, and an electronic device.

### BACKGROUND

It has become a part of people's daily lives to use electronic devices to browse multimedia resources such as short-form videos as computer vision techniques progressed and electronic devices popularized. At present, advertising multimedia resources such as advertising short-form videos may be usually inserted in information streams of some multimedia resources such as short-form videos. In a process of producing advertising videos, editable objects are usually visual elements such as pictures, text and music.

### SUMMARY

According to a first aspect of embodiments of the disclosure, a method for processing a video is provided. The method includes: displaying a video processing page including an editing region of a target template video, the editing region for displaying at least one video element of the target template video; obtaining associated object information of at least one associated object of a target video element corresponding to an object association instruction in response to the object association instruction triggered based on any video element; generating a target video based on the target template video in response to a video generation instruction, and establishing association information between the associated object information and the target video.

According to a second aspect of embodiments of the disclosure, an apparatus for processing a video is provided. The apparatus includes: a video processing page displaying module, configured to display a video processing page, the video processing page comprises an editing region of a target template video for displaying at least one video element of the target template video; an associated object information obtaining module, configured to obtain associated object information of at least one associated object of a target video element corresponding to an object association instruction in response to the object association instruction triggered based on any video element; a target video generating module, configured to generate a target video based on the target template video in response to a video generation instruction; and an association information establishing module, configured to establish association information between the associated object information and the target video.

According to a third aspect of embodiments of the disclosure, a non-transitory computer-readable storage medium is provided. The non-transitory computer-readable storage medium has stored therein instructions that, when executed by a processor of an electronic device, causes the electronic device to perform the above method.

The preferred embodiments are defined in the dependent claims.

The technical solutions provided in the embodiments of the disclosure at least bring the following beneficial effects.

By providing the function of adding the associated object information during the process of producing the video and establishing the association information between the target video and the associated object information of the at least one associated object that needs to be promoted, the associated object information of the associated object may be added into the target video to be played subsequently by the editing for one time. The interactive complexity of producing the video is effectively reduced and the efficiency of producing the video is improved. In addition, the associated object information is added to the target video to be played subsequently through a mapping manner. The problem that a user may not interact with the associated object information when the associated object information is directly made into the target video, may be effectively avoided. The associated object information of the at least one associated object is mapped to the target video. The subsequent associated object displayed with the target video may be dynamically adjusted, audiences of the target video may be greatly expanded, and the flexibility of pushing the target video and the conversion rate of promoted objects may be effectively improved.

It is to be understood that both the foregoing general description and the following detailed description are exemplary and explanatory only and are not restrictive of the disclosure.

### BRIEF DESCRIPTION OF THE DRAWINGS

The drawings, which are incorporated in and constitute a part of this specification, illustrate embodiments consistent with the disclosure and, together with the description, serve to explain the principles of the disclosure, but may not constitute an improper limitation of the disclosure.
FIG. 1 is a schematic diagram illustrating an application environment according to some embodiments of the disclosure.
FIG. 2 is a flowchart of a method for processing a video according to some embodiments of the disclosure.
FIG. 3 is a schematic diagram illustrating a video processing page according to some embodiments of the disclosure.
FIG. 4 is a schematic diagram illustrating a video processing page for displaying object association confirmation operation information according to some embodiments of the disclosure.
FIG. 5 is a schematic diagram illustrating a video processing page for displaying object association operation information according to some embodiments of the disclosure.
FIG. 6 is a flowchart of obtaining associated object information of at least one associated object of a target video element corresponding to an object association instruction in response to an object addition instruction triggered based on object association operation information according to some embodiments of the disclosure.
FIG. 7 is a flowchart of obtaining associated object information of at least one associated object of a target video element corresponding to an object association instruction in response to an object addition instruction triggered based on object association operation information according to some embodiments of the disclosure.
FIG. 8 is a schematic diagram illustrating a video processing page for displaying object addition operation information according to some embodiments of the disclosure.
FIG. 9 is a schematic diagram illustrating a video processing page after an object addition instruction triggered based on first object association operation information according to some embodiments of the disclosure.
FIG. 10 is a schematic diagram illustrating a video processing page after an object addition instruction triggered based on second object association operation information according to some embodiments of the disclosure.
FIG. 11 is a flowchart of a method for playing a video according to some embodiments of the disclosure.
FIG. 12 is a flowchart of associated object information of a target associated object according to some embodiments of the disclosure.
FIG. 13 is a block diagram of an apparatus for processing a video according to some embodiments of the disclosure.
FIG. 14 is a block diagram of an apparatus for playing a video according to some embodiments of the disclosure.
FIG. 15 is a block diagram of an electronic device for processing a video or playing a video according to some embodiments of the disclosure.

### DETAILED DESCRIPTION

To enable those skilled in the art to better understand the technical solutions of the disclosure, the technical solutions in embodiments of the disclosure will be described clearly and completely with reference to the drawings.

It should be noted that the terms such as "first" and "second" in the specification and claims and the drawings of the disclosure are used to distinguish similar objects, and not necessarily used to describe a specific order or sequence. It should be understood that the data used in this way may be interchanged with each other under appropriate circumstances so that the embodiments of the disclosure described herein may be implemented in a sequence other than those illustrated or described herein. The implementation manners described in the following embodiments do not represent all implementation manners consistent with the disclosure. Rather, they are merely examples of apparatuses and methods consistent with some aspects of the disclosure as detailed in the appended claims.

It should be noted that user information (including user equipment information, user personal information and the like) and user data (including data for displaying, analyzed data and the like) described in the disclosure has been authorized by the user or fully authorized by all parties.

In the related art, to promote an object, associated information of the promoted object is usually used as a visual element and added to a video during a process of producing the video. Alternatively, after a video is produced, the video is edited for a second time based on some platforms, and associated information of the promoted object is added to the video and associated with a timeline corresponding to the video.

In the related art as mentioned above, the former uses the associated information of the promoted object as the visual element, which causes a user to be unable to interact with the associated information of the promoted object when watching the video. The associated information of the promoted object existing as the visual element is fixed after the video is produced. Therefore, there is a problem of a single audience group when the video is pushed in the subsequent. The latter requires the editing for the second time and there are problems such as more complicated interaction and low efficiency.

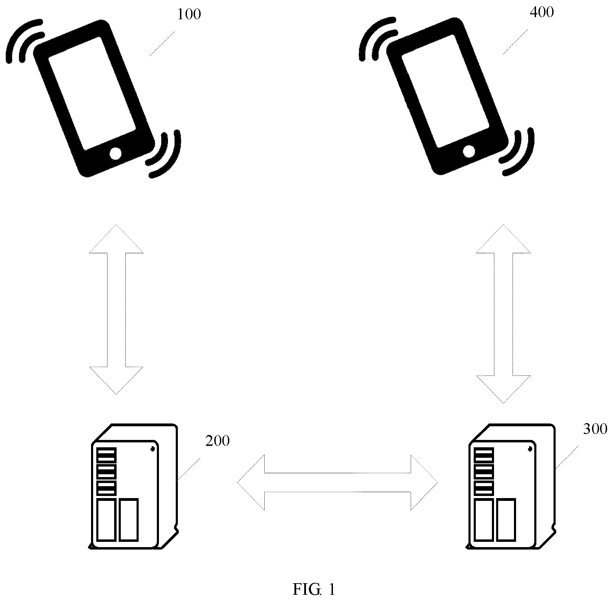

Referring to FIG. 1, FIG. 1 is a schematic diagram illustrating an application environment according to some embodiments of the disclosure. As illustrated in FIG. 1, the application environment may include a first terminal 100, a first server 200, a second server 300 and a second terminal 400.

In some embodiments, the first terminal 100 may be configured to provide video processing services to any video publisher. In detail, the video publisher may perform video processing based on the first terminal 100 in combination with an object to be promoted. The first server 200 may be a background server corresponding to the first terminal 100, for providing data support for the video processing services of the first terminal 100 and forwarding the video and video-related data generated by the first terminal 100 to the second server 300. The second server 300 may be a background server corresponding to the second terminal 400. The second server 300 may push the video and video-related data to the second terminal 400. The second terminal may be a terminal corresponding to the video publisher or a terminal corresponding to a viewer.

In some embodiments, the first terminal 100 and the second terminal 400 may include, but are not limited to, smart phones, desktop computers, tablet computers, notebook computers, smart speakers, digital assistants, augmented reality (AR)/virtual reality (VR) devices, smart wearable devices and the like electronic devices. The first terminal 100 and the second terminal 400 may also be software running on the above-mentioned electronic devices, such as applications. Optionally, the operating system running on the electronic device may include, but is not limited to, Android^{™} system, IOS^{™} system, linux^{™}, windows^{™}.

In some embodiments, the first server 200 and the second server 300 may be independent physical servers, server clusters or distributed systems composed of multiple physical servers, or cloud servers for providing basic cloud computing services such as cloud services, cloud databases, cloud computing, cloud functions, cloud storage, network services, cloud communications, middleware services, domain name services, security services, content delivery networks (CDNs), big data and artificial intelligence platforms.

In addition, it should be noted that the application environment in FIG. 1 is only an application environment provided by the disclosure. In actual applications, other application environments may also be included. For example, it may include a terminal for the video publisher to edit the promoted object.

In some embodiments of the disclosure, the first terminal 100, the first server 200, the second server 300 and the second terminal 400 may be directly or indirectly connected one another through wired or wireless communication, which is not limited in the disclosure.

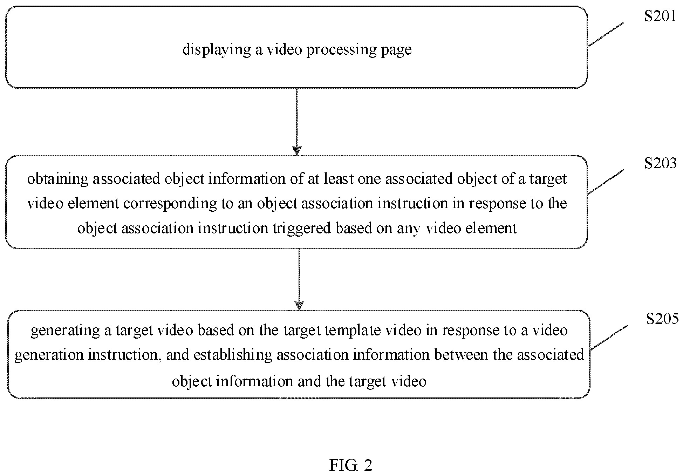

FIG. 2 is a flowchart of a method for processing a video according to some embodiments of the disclosure. The method may be applicable to the first terminal as mentioned above. As illustrated in FIG. 2, the method may include the following actions S201, S203 and S205.

In S201, a video processing page is displayed.

In some embodiments, the video processing page may include an editing region of a target template video. In detail, the editing region may display at least one video element of the target template video. In some embodiments, the at least one video element may include, but is not limited to, at least one of: image elements, text elements (for example, subtitle elements), audio elements (for example, dubbing elements, background music elements) and video elements (sub-videos). Optionally, the at least one video element may be a visual element. Optionally, in a case where the music element of the target template video is a piece of overall music, video elements other than the background music element in the at least one video element may be sequentially displayed in the editing region according to a sequence of playing each frame. Optionally, in a case where the music element of the target template video is multiple pieces of music, the at least one video element may be sequentially displayed in the editing region according to a sequence of playing each frame. Optionally, multiple video elements corresponding to the same frame, such as an image element and a subtitle element corresponding to the same frame, may be arranged in sequence according to a preset sequence of different types of video elements.

In some embodiments, the video processing page may further include a preview region. The preview region may be configured to display, preview and play the target template video.

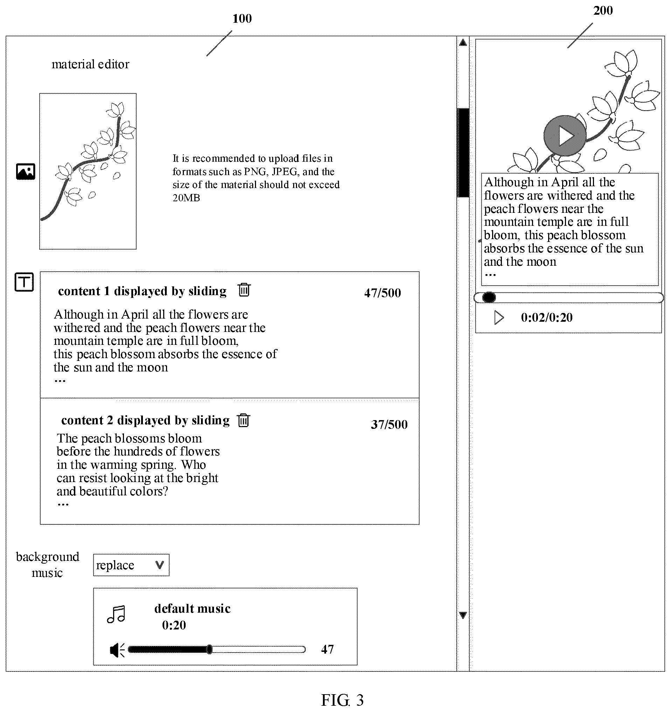

In some embodiments, as illustrated in FIG. 3, FIG. 3 is a schematic diagram illustrating a video processing page according to some embodiments of the disclosure. In detail, the region corresponding to 100 may be the editing region and the region corresponding to 200 may be the preview region. Optionally, the editing region may be provided with a sliding block. Correspondingly, video elements may be viewed based on the sliding of the sliding block.

In some embodiments, the target template video may be selected from a large number of template videos and then the video processing page is entered. Correspondingly, the above method may further include: displaying a template display page; and executing displaying the video processing page in response to a template selection instruction triggered based on any template view.

In some embodiments, the template display page may include template views of a preset number of template videos. In detail, the number (preset number) of template views displayed in the template display page may be determined by combining a layout of the template display page in the actual application and size information of a single template view. Optionally, a manner of setting a slider on the template display page may be used to display more template views. In some embodiments, the template view of the template video may be an image that may reflect the main content of the template video, for example, a cover image.

In the embodiments, the template views of the preset number of template videos may be displayed in the template display page. It is convenient for the user to select the target template video in a targeted manner based on needs and the efficiency of producing the video may be improved.

In S203, associated object information of at least one associated object of a target video element corresponding to an object association instruction is obtained in response to the object association instruction triggered based on any video element.

In some embodiments, a preset operation may be executed to trigger the object association instruction and then the action of obtaining the associated object information of the at least one associated object of the target video element corresponding to the object association instruction may be executed.

In some embodiments, obtaining the associated object information of the at least one associated object of the target video element corresponding to the object association instruction in response to the object association instruction triggered based on any video element may include : displaying object association confirmation operation information in the video processing page in response to the object association instruction triggered based on any video element; and displaying object association operation information in the video processing page in response to a confirmation instruction triggered based on the object association confirmation operation information.

The associated object information of the at least one associated object of the target video element corresponding to the object association instruction is obtained in response to an object addition instruction triggered based on the object association operation information.

In some embodiments, after the object association instruction is triggered, the object association confirmation operation information may be displayed in the video processing page first. In some embodiments, with reference to FIG. 3, it is assumed that the text element "essence" is the target video element. Optionally, a cursor may be positioned above "essence" and selecting "essence" (the present operation) may trigger the object association instruction. Optionally, selecting "essence" (the present operation) and right-click (the preset operation) may trigger the object association instruction. The object association confirmation operation information may be displayed in the video processing page.

In some embodiments, the object association confirmation operation information may be configured to trigger to display the object association operation information. The object association operation information may be configured to trigger the object association of the target video element.

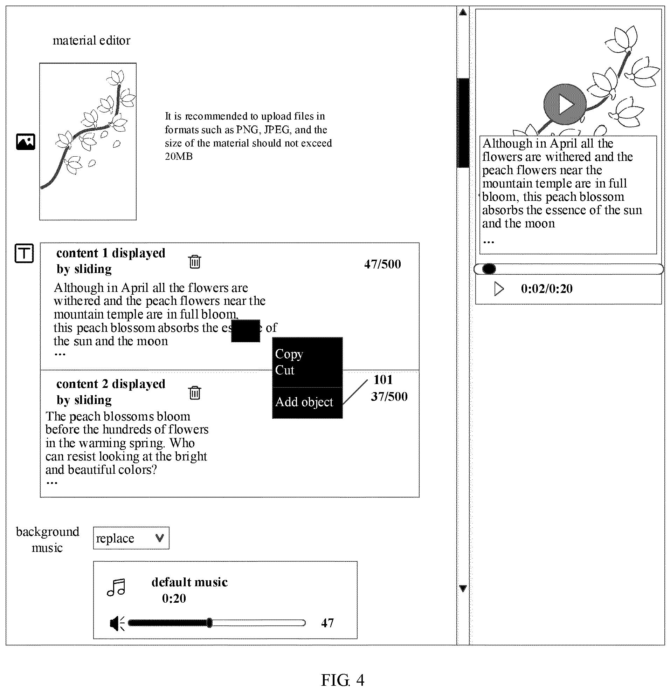

In some embodiments, as illustrated in FIG. 4, FIG. 4 is a schematic diagram illustrating a video processing page for displaying object association confirmation operation information according to some embodiments of the disclosure. In detail, "add object" in the information corresponding to 101 is one embodiment of the object association confirmation operation information. Optionally, while displaying the object association confirmation operation information, other operation information for the target video element may also be displayed, such as cut and copy in FIG. 4.

In some embodiments, the confirmation instruction may be triggered by an operation such as clicking the object association confirmation operation information and the object association operation information is displayed in the video processing page. In some embodiments, when the object association confirmation operation information is displayed, the object association operation information may be hidden.

In some embodiments, the object association operation information includes first object association operation information. In detail, the first object association operation information may be operation information for automatically triggering the object association of the target video element. Optionally, the object association operation information includes second object association operation information. In detail, the second object association operation information may be operation information for non-automatically triggering the object association of the target video element. Optionally, the corresponding interactive page may be displayed for the user to confirm the associated object. Optionally, the object may be an object that needs to be promoted in combination with a video. The objects may be different based on actual application requirements. Optionally, the object may include, but is not limited to, commodity, application, novel, etc.

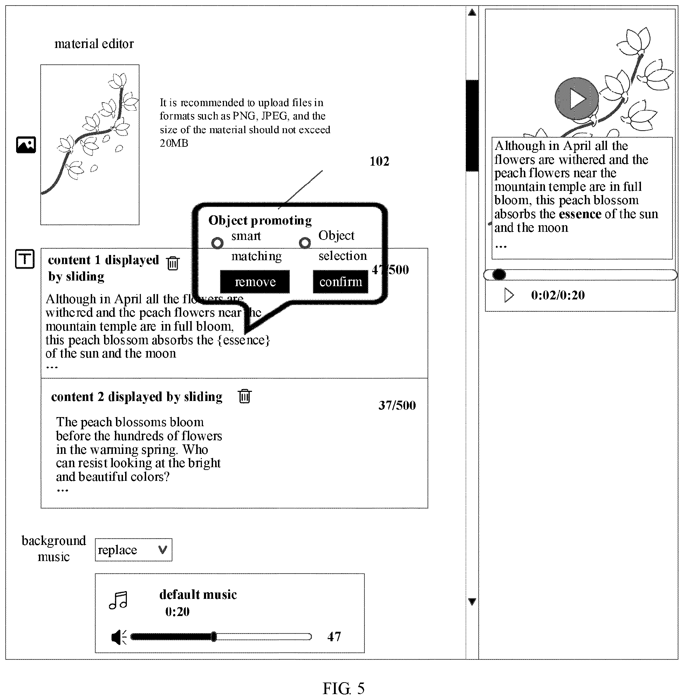

In some embodiments, as illustrated in FIG. 5, FIG. 5 is a schematic diagram illustrating a video processing page for displaying object association operation information according to some embodiments of the disclosure. In detail, the information corresponding to 102 in FIG. 5 may be the object association operation information, in which the information corresponding to "smart matching" may be the first object association operation information and the information corresponding to "object selection" may be the second object association operation information.

In some embodiments, displaying the object association operation information in the video processing page in response to the confirmation instruction triggered based on the object association confirmation operation information may include: displaying the object association operation information in a target region of the video processing page in response to the confirmation instruction triggered based on the object association confirmation operation information.

In some embodiments, the target region is located within a preset range located by a position of the target video element corresponding to the object association instruction. In detail, the preset range may be set in combination with the page layout in actual applications.

In some embodiments, the object association operation information may be displayed within the preset range of the location of the target video element. The user may more intuitively understand that the object association operation information is configured to add the object associated with the target video element.

In some embodiments, the method for processing the video may further include the following: updating the target video element displayed in the video processing page based on a preset display format in response to a confirmation instruction triggered based on the object association confirmation operation information.

In some embodiments, the preset display format may be a display format of the target video element, which is set in advance. In some embodiments, as illustrated in FIG. 5, the target video element may be bolded and combined with braces to divide the target video element to display.

In the embodiments, the target video element displayed in the video processing page is updated based on the preset display format. It may intuitively distinguish the target video element from other non-target video elements. The convenience of the operation process may be improved.

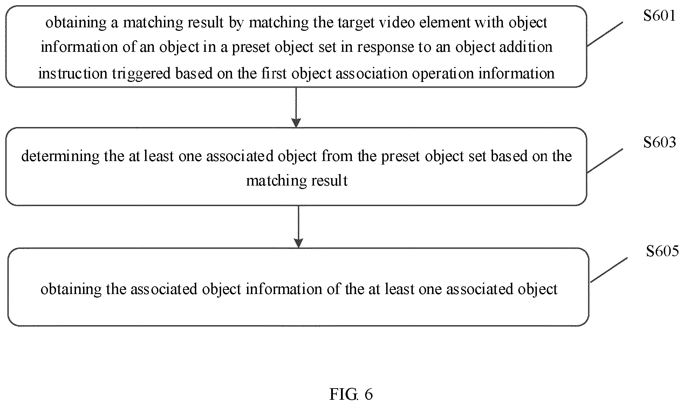

In some embodiments, the object association of the target video element may include associating the target video element with the corresponding object and obtaining the associated object information of the associated object. Optionally, as illustrated in FIG. 6, obtaining the associated object information of the at least one associated object of the target video element corresponding to the object association instruction in response to the object addition instruction triggered based on the object association operation information includes the following actions S601, S603 and S605.

In S601, a matching result is obtained by matching the target video element with object information of an object in a preset object set in response to an object addition instruction triggered based on the first object association operation information.

In S603, the at least one associated object is determined from the preset object set based on the matching result.

In S605, the associated object information of the at least one associated object is obtained.

In some embodiments, in combination with the embodiments corresponding to FIG. 5, the object addition instruction may be triggered by clicking the information (circle control) corresponding to "smart matching".

In the embodiments of the disclosure, the object information of the object may be information capable of describing the object (hereinafter referred to as object description information). In some embodiments, the object description information may include, but is not limited to, object text (for example, name, brand, price and type) and object image. Optionally, the object information may also include object link information. In some embodiments, the preset object set may include object information of a certain number of objects. Optionally, the user may pre-enter the object information of the certain number of objects mentioned above in combination with the corresponding terminal device.

In some embodiments, when the target video element is text information, the matching result may include whether the object information of the object in the preset object set includes the target video element. Optionally, in a case where the object information of any object includes the target video element, the corresponding object may be used as the associated object of the target video element.

In some embodiments, when the target video element is image information, the feature information (for example, feature vector) of the target video element and the feature information (for example, feature vector) of the object information may extracted and the similarity between the feature information of the target video element and the feature information of the object information may be calculated, during the process of matching the target video element with the object information of the object in the preset object set. Optionally, the matching result may include the similarity between the feature information of the target video element and the feature information of the object information. Optionally, the similarity between the feature information may include, but is not limited to, the Euclidean distance, the cosine distance and the Manhattan distance between the feature information. Optionally, an object whose similarity is greater than or equal to a preset similarity threshold may be used as the associated object of the target video element. Optionally, after the similarities with the target video element are sorted in descending order, the top N objects (N is a preset threshold for the number of objects) may be used as the associated objects of the target video element.

In some embodiments, the at least one associated object may be one or more (at least two) associated objects. Optionally, the object information of the associated object may be the aforementioned associated object information.

In the embodiments, the target video element is automatically triggered to perform the object association operation through the first object association operation information. The efficiency and convenience of object association may be greatly improved.

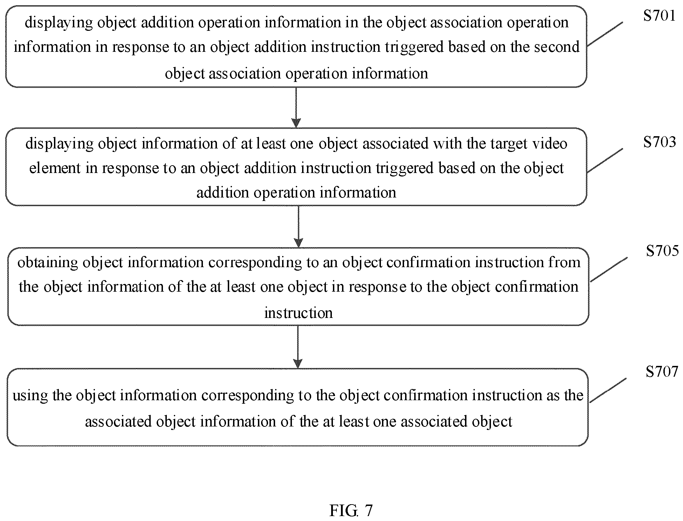

In some embodiments, as illustrated in FIG. 7, obtaining the associated object information of the at least one associated object of the target video element corresponding to the object association instruction in response to the object addition instruction triggered based on the object association operation information may include the following actions S701, S703, S705 and S707.

In S701, object addition operation information is displayed in the object association operation information in response to an object addition instruction triggered based on the second object association operation information.

In S703, object information of at least one object associated with the target video element is displayed in response to an object addition instruction triggered based on the object addition operation information.

In S705, object information corresponding to an object confirmation instruction is obtained from the object information of the at least one object in response to the object confirmation instruction.

In S707, the object information corresponding to the object confirmation instruction is used as the associated object information of the at least one associated object.

In some embodiments, in combination with the embodiments corresponding to FIG. 5, the object addition instruction may be triggered by clicking the information (circle control) corresponding to "object selection".

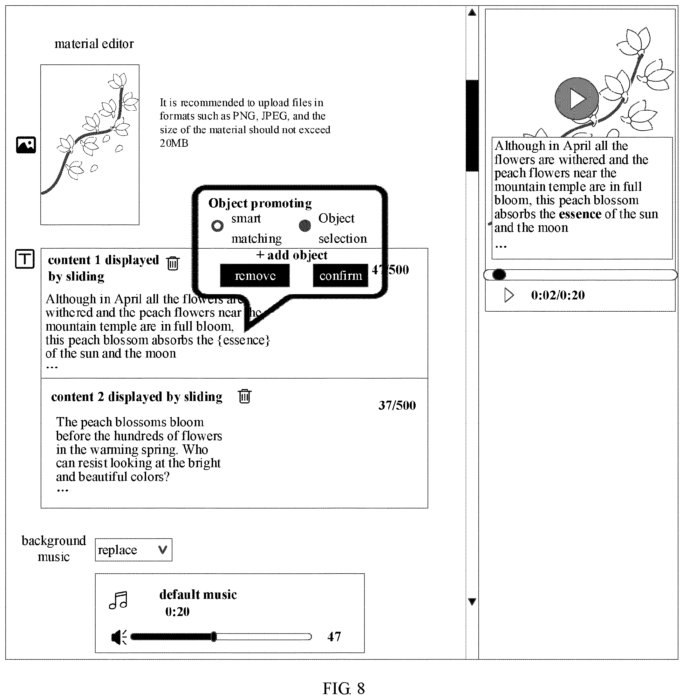

In some embodiments, the object addition operation information may be triggered by the user to display the object screening information. In some embodiments, as illustrated in FIG. 8, FIG. 8 is a schematic diagram illustrating a video processing page for displaying object addition operation information according to some embodiments of the disclosure. In detail, "+add object" in FIG. 8 is one embodiment for the object addition operation information.

In some embodiments, the object addition instruction may be triggered by an operation such as clicking the object addition operation information and then the object information of at least one object associated with the target video element may be displayed. In some embodiments, the object information of at least one object associated with the target video element may be displayed in the video processing page in a pop-up window or may be displayed in a new page. Optionally, after the object addition instruction is triggered, the target video element may be automatically matched with the object information of the object in the preset object set to determine at least one object associated with the target video element. In detail, the refinement for matching the target video element with the object information of the object in the preset object set to determine the at least one object associated with the target video element, reference should be made to the above-mentioned related actions, which will not be repeated herein.

In some embodiments, while displaying the object information of the at least one object associated with the target video element, the object screening operation information configured to quickly select the target associated object may also be displayed. In some embodiments, the object screening operation information may include a text box for inputting object identification information and the like. Optionally, while displaying the object information of the at least one object associated with the target video element, a corresponding selection control may also be set before the object information of each object. Correspondingly, the associated object may be selected through the selection control. Optionally, after the corresponding object information is selected based on the selection control, the corresponding confirmation button may be configured to trigger the object confirmation instruction. The object information corresponding to the object confirmation instruction may be the object information of the at least one object selected when the object confirmation instruction is triggered. It may also be part of the information that needs to be displayed during the promotion process extracted from the object information of the at least one object selected when the object confirmation instruction is triggered.

In some embodiments, the object association is performed through human-computer interaction. It may better perform the object association according to user requirements and improve the accuracy of the object association.

In some embodiments, the video processing page may further include a preview region. Correspondingly, the method for processing the video may further include: determining a preview object based on the at least one associated object; obtaining preview object information of the preview object; and updating the target template video displayed in the preview region based on the preview object information.

In some embodiments, the preview object may be a preset sample object that belongs to the same type as the at least one associated object. For example, the at least one associated object belongs to essence skin care products. Correspondingly, an essence skin care product (for example, essence A) is used as the preview object of essence skin care products. Optionally, an object selected from the at least one associated object may be used as the preview object. Optionally, if the at least one associated object includes one object, correspondingly, the one object may be used as the preview object. Optionally, if the at least one associated object includes at least two objects, the preview object may be randomly selected from the at least one associated object.

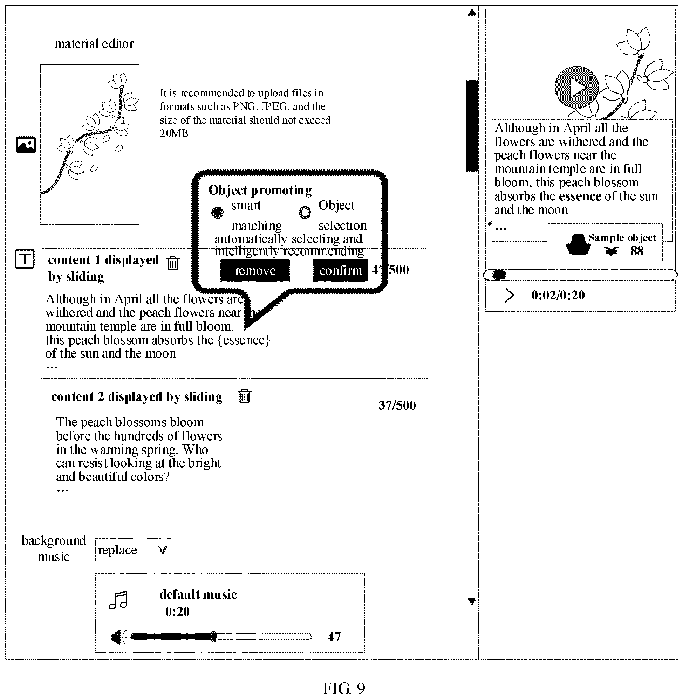

In some embodiments, it is assumed that in a scene where the object is automatically associated, the preset sample object of the same type as the at least one associated object is used as the preview object, as illustrated in FIG. 9, which is a schematic diagram illustrating a video processing page after an object addition instruction triggered based on first object association operation information according to some embodiments of the disclosure.

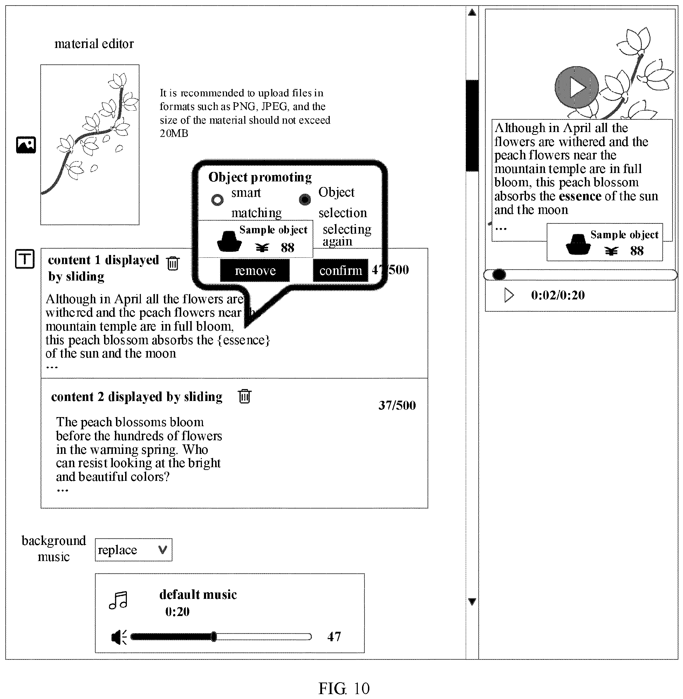

In some embodiments, it is assumed that in a scene where the object is not automatically associated, an object X selected from the at least one associated object is used as the preview object, as illustrated in FIG. 10, which is a schematic diagram illustrating a video processing page after an object addition instruction triggered based on second object association operation information according to some embodiments of the disclosure.

In the embodiments, the preview object information of the preview object is displayed in the target template video in the preview region. It may facilitate the user to intuitively understand the video content after the object information is added in the subsequent process of playing the video.

In another embodiment, the operation of obtaining the associated object information of the at least one associated object of the target video element corresponding to the object association instruction may be directly triggered by performing a preset operation on the video element.

In some embodiments, with reference to FIG. 3, it is assumed that the text element "essence" in FIG. 3 is the target video element. Optionally, the object association instruction may be triggered by performing a preset operation based on "essence". Optionally, "essence" may be identified with a preset symbol. Correspondingly, when "essence" is identified by the preset symbol, the object association instruction may be triggered at the same time. The action of obtaining the associated object information of the at least one associated object of the target video element corresponding to the object association instruction may be executed.

In the embodiments of the disclosure, for the detailed actions of obtaining the associated object information of the at least one associated object of the target video element corresponding to the object association instruction, reference should be made to the corresponding embodiments in FIG. 6 to obtain the associated object information of the at least one associated object, which is not repeated herein.

In the embodiments, the associated object information of the at least one associated object of the target video element may be triggered to be obtained through one instruction or multiple instructions. The flexibility of obtaining the associated object information may be effectively improved. The associated object information of the at least one associated object of the target video element may be triggered to be obtained through one instruction, which may greatly increase the speed of obtaining the associated object information and improve the efficiency of producing the video. The associated object information of the at least one associated object of the target video element may be triggered to be obtained through multiple instructions, which may improve the user's participation in the process of producing the video, help the user to select the associated object information that is more in line with the user's needs, and improve the accuracy of obtaining the associated object information.

In S205, a target video is generated based on the target template video in response to a video generation instruction, and association information is established between the associated object information and the target video.

In some embodiments, the video processing page may also be provided with a control for triggering the video generation instruction. Optionally, the video generation instruction may be triggered by clicking the control.

In some embodiments, the user may edit the video element in the target template video to update the target template video. Accordingly, generating the target video based on the target template video may include generating the target video based on the updated target template video. Optionally, the user may not edit the video element in the target template video and the target template video is used directly as the target video.

In some embodiments, editing the video element in the target template video may include, but is not limited to, triggering a corresponding element updating instructions based on the video element displayed in the editing region and selecting the corresponding material to update the video element in the target template video.

In some embodiments, updating the subtitle element and the dubbing element may be taken as an example. The subtitle element and the dubbing element may be updated by uploading text information in combination with speech synthesis technology. Optionally, the subtitle element and the dubbing element may also be updated by uploading an audio file in combination with text recognition technology. Optionally, the subtitle element and the dubbing element may also be updated by editing the subtitle in the editing region and combining with speech synthesis technology.

In some embodiments, establishing the association information between the associated object information and the target video may include: establishing the association information between the associated object information and the target video element of the target video.

In the embodiments, during the process of producing the video, by associating the associated object information with the target video element, the function of adding the associated object information is realized and it is more convenient to locate the display timing of the associated object information during the subsequent video playing. The degree of compatibility between the video content and the associated object information may be ensured.

In practical applications, if the subtitle element is adjusted, the subtitle information and the video frame need to be aligned and calibrated. In some embodiments, the method may further include: obtaining updated subtitle information in response to a subtitle updating instruction triggered based on the subtitle element; determining text length information corresponding to the updated subtitle information; determining, based on the text length information, a display time of a video frame corresponding to the updated subtitle information in the target template video; and updating the target template video based on the display time and the updated subtitle information.

In some embodiments, the display time corresponding to the video frame may be a playing duration of the video frame. In practical applications, when the text length information is determined, the playing duration of the corresponding subtitle information may be determined. Correspondingly, it may be achieved by adjusting the display duration of the video frame corresponding to the updated subtitle information in the template video to align and calibrate the subtitle information and the video frame.

In some embodiments, the playing duration of the video frame may be adjusted by combining the text length information of the subtitle information corresponding to a certain frame. It may effectively ensure that the updated subtitle information corresponds to the video frame in the video. The dynamic alignment between the subtitle information and the video frame may be realized. The smoothness of subsequent video playing may be ensured.

In some embodiments, the method for processing the video may further include: obtaining updated subtitle information in response to a subtitle updating instruction triggered based on the subtitle element; determining text length information corresponding to the updated subtitle information; and updating the target template video based on the updated subtitle information in response to the text length information being less than or equal to preset text length information.

In some embodiments, the preset text length information may be an upper limit of the text length, which is set in advance in combination with the playing duration of the video frame corresponding to the subtitle information. Correspondingly, if the text length information corresponding to the updated subtitle information is less than or equal to the preset text length information, the target template video may be directly updated based on the updated subtitle information.

In some embodiments, when the subtitle information is updated, the preset upper limit of the text length may be combined with the text length information corresponding to the updated subtitle information. It may effectively ensure that the updated subtitle information still corresponds to the corresponding video frame. The dynamic alignment between the subtitle information and the video frame may be achieved. The smoothness of subsequent video playing may be ensured.

In some embodiments, the method for processing the video may further include: displaying text length upper limit information corresponding to the subtitle element in the video processing page in response to the text length information being greater than the preset text length information.

In some embodiments, when the text length information corresponding to the updated subtitle information is greater than the preset text length information, it will cause the updated subtitle information to distinguish the corresponding video frame. Correspondingly, the corresponding text length upper limit information is displayed in the video processing page and the user may be prompted to adjust the subtitle information to ensure that the updated subtitle information corresponds to the video frame in the video.

In some embodiments, when the subtitle information is updated, semantic recognition may be performed on the updated subtitle information. When it is recognized that the updated subtitle information has grammatical problems such as incompatibility of sentences, it may also feed the corresponding prompt information back to the user to ensure the quality of the generated video and subsequent promotion effects.

In some embodiments, when the text length information corresponding to the updated subtitle information is greater than the preset text length information, the corresponding text length upper limit information may be displayed in the video processing page. The user may be prompted to adjust the subtitle information. It may effectively ensure that the updated subtitle information corresponds to the video frame in the video. The smoothness of subsequent video playing may be ensured.

In some embodiments, the method for processing the video may further include: obtaining an association recognition network corresponding to the at least one associated object in response to the at least one video element being updated; obtaining at least one associated video element by performing association recognition on the at least one video element updated based on the association recognition network; displaying the at least one associated video element in the video processing page; and updating the target video element based on an associated video element corresponding to an association confirmation instruction in response to the association confirmation instruction triggered based on the at least one associated video element.

In some embodiments, when the target video element is determined, if any video element in the target template video is updated, correspondingly, the association recognition network corresponding to the at least one associated object may be obtained. In detail, the association recognition network corresponding to each associated object may be used to identify the video element associated with the associated object. Optionally, for different types of video elements, the association recognition network for recognizing each type of video elements may be pre-trained.

Optionally, when at least one associated video element is identified, it may be displayed to the user so that the user may confirm the selection of the target video element.

In some embodiments, when the video element is updated, the updated video element is performed with the association recognition in combination with the association recognition network corresponding to the associated object. It may realize automatic matching and updating the target video element.

In some embodiments, taking the target video element "essence" as an example, the system may recommend to the user the target video element more in line with the associated object by combining the actual associated object and in a case where there is a difference between the target video element and the associated object. For example, the associated object is a skin care product of a certain brand: muscle foundation. Accordingly, the user may be advised to update the target video element to "muscle foundation" and adjust the corresponding subtitle information in combination with "muscle foundation", so that the subtitle information may be more smooth.

As may be seen from the technical solutions provided by the embodiments of the disclosure, by providing the function of adding the associated object information during the process of producing the video and establishing the association information between the target video and the associated object information of the at least one associated object that needs to be promoted, the associated object information of the associated object may be added into the target video to be played subsequently by the editing for one time. The interactive complexity of producing the video is effectively reduced and the efficiency of producing the video is improved. In addition, the associated object information is added to the target video to be played subsequently through a mapping manner. The problem that a user may not interact with the associated object information when the associated object information is directly made into the target video, may be effectively avoided. The associated object information of the at least one associated object is mapped to the target video. The subsequent associated object displayed with the target video may be dynamically adjusted, audiences of the target video may be greatly expanded, and the flexibility of pushing the target video and the conversion rate of promoted objects may be effectively improved.

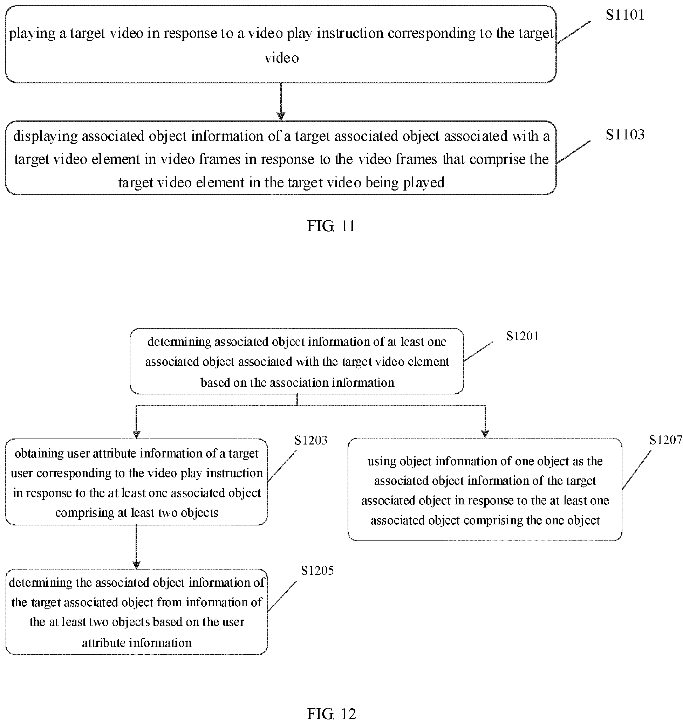

FIG. 11 is a flowchart of a method for playing a video according to some embodiments of the disclosure. The method may be applicable to the second terminal. As illustrated in FIG. 11, the method may include the following actions S1101 and S1103.

In S1101, a target video is played in response to a video play instruction corresponding to the target video.

In some embodiments, after the target video is generated, the video push platform may push the target video by combining the association degree between the associated object corresponding to the target video and the user in the platform. Correspondingly, when the user browses the target video, the video play instruction may be triggered.

In some embodiments, the association degree between the associated object corresponding to the target video and the user in the platform may include, but is not limited to, determining in combination with algorithms such as artificial intelligence.

In S1103, associated object information of a target associated object associated with a target video element is displayed in video frames in response to the video frames that include the target video element in the target video being played.

In some embodiments, the associated object information of the target associated object may include the object description information and the object link information of the target associated object. Correspondingly, displaying the associated object information of the target associated object associated with the target video element in the video frames may include displaying the object description information of the target associated object associated with the target video element in the video frames. Optionally, the user may click the object description information and the object link information of the target associated object may be called to enter the corresponding object page. It may realize the interaction between the user and the object information.

In some embodiments, the associated object information is determined based on the association information obtained by the method for processing the video as described above. Correspondingly, the method may further include obtaining the associated object information of the target associated object. In detail, as illustrated in FIG. 12, obtaining the associated object information of the target associated object may include the following actions S1201, S1203, S1205 and S1207.

In S1201, associated object information of at least one associated object associated with the target video element is determined based on the association information.

In S1203, user attribute information of a target user corresponding to the video play instruction is obtained in response to the at least one associated object including at least two objects.

In S1205, the associated object information of the target associated object is obtained from information of the at least two objects based on the user attribute information.

In some embodiments, the user attribute information may be basic attribute information of the user's age and gender. In some embodiments, it is assumed that the at least two objects are men's essence A and women's essence B. Correspondingly, if the target user is determined to be female in combination with the user attribute information of the target user, women's essence B may be used as the associated object information of the target associated object. Conversely, if the target user is determined to be male in combination with the user attribute information of the target user, the men's essence A may be used as the associated object information of the target associated object.

In some embodiments, it is assumed that the at least two objects are essence C suitable for women aged 20-30 and essence D suitable for women aged 40-50. Correspondingly, if it is determined that the target user is a 25-year-old female by combining the user attribute information of the target user, essence C suitable for women aged 20-30 may be used as the associated object information of the associated object.

In some embodiments, as illustrated in FIG. 12, obtaining the associated object information of the target associated object may further include the following.

In S1207, object information of one object is used as the associated object information of the target associated object in response to the at least one associated object including the one object.

In the embodiments, when there are at least two associated objects corresponding to the target video element, the target associated object that more satisfy the needs of the target user may be selected by combining the user attribute information of the target user. The accuracy and promotion of the object may be improved. When the associated object corresponding to the target video element is one object, the object information of the one object is directly used as the associated object information of the target associated object and the associated object information may be quickly determined.

In some embodiments, obtaining the associated object information of the associated object may be executed based on the association information when the video play instruction is triggered or when the video frame of the target video element is played. Obtaining the associated object information of the associated object may also be executed before pushing the target video to the corresponding terminal of the target user.

As may be seen from the technical solutions provided by the embodiments of the disclosure, by providing the function of adding the associated object information during the process of producing the video and establishing the association information between the target video and the associated object information of the at least one associated object that needs to be promoted, the associated object information of the associated object may be added into the target video to be played subsequently by the editing for one time. The interactive complexity of producing the video is effectively reduced and the efficiency of producing the video is improved. In addition, the associated object information is added to the target video to be played subsequently through a mapping manner. The problem that a user may not interact with the associated object information when the associated object information is directly made into the target video, may be effectively avoided. The associated object information of the at least one associated object is mapped to the target video. The subsequent associated object displayed with the target video may be dynamically adjusted, audiences of the target video may be greatly expanded, and the flexibility of pushing the target video and the conversion rate of promoted objects may be effectively improved.

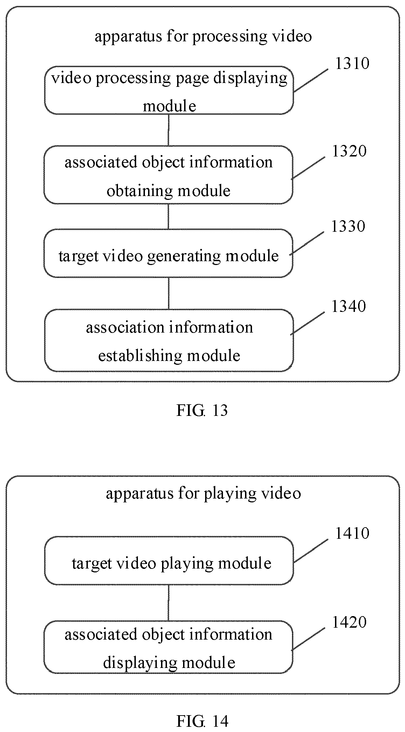

FIG. 13 is a block diagram of an apparatus for processing a video according to some embodiments of the disclosure. As illustrated in FIG. 13, the apparatus may include the following.

A video processing page displaying module 1310 is configured to display a video processing page including an editing region of a target template video, the editing region for displaying at least one video element of the target template video.

The associated object information obtaining module 1320 is configured to obtain associated object information of at least one associated object of a target video element corresponding to an object association instruction in response to the object association instruction triggered based on any video element.

The target video generating module 1330 is configured to generate a target video based on the target template video in response to a video generation instruction.

The association information establishing module 1340 is configured to establish association information between the associated object information and the target video.

In some embodiments, the associated object information obtaining module 1320 includes: an object association confirmation operation information displaying unit, configured to display object association confirmation operation information in the video processing page in response to the object association instruction triggered based on any video element; an object association operation information displaying unit, configured to display object association operation information in the video processing page in response to a confirmation instruction triggered based on the object association confirmation operation information; and an associated object information obtaining unit, configured to obtain the associated object information of the at least one associated object of the target video element corresponding to the object association instruction in response to an object addition instruction triggered based on the object association operation information.

In some embodiments, the object association operation information includes first object association operation information, and the associated object information obtaining unit includes: a matching unit, configured to obtain a matching result by matching the target video element with object information of an object in a preset object set in response to an object addition instruction triggered based on the first object association operation information; an associated object determining unit, configured to determine the at least one associated object from the preset object set based on the matching result; and an associated object information subunit, configured to obtain the associated object information of the at least one associated object.

In some embodiments, the object association operation information includes second object association operation information, and the associated object information obtaining unit includes: an object addition operation information displaying unit, configured to display object addition operation information in the object association operation information in response to an object addition instruction triggered based on the second object association operation information; an object information displaying unit, configured to display object information of at least one object associated with the target video element in response to an object addition instruction triggered based on the object addition operation information; an object information obtaining unit, configured to obtain object information corresponding to an object confirmation instruction from the object information of the at least one object in response to the object confirmation instruction; and an associated object information determining unit, configured to use the object information corresponding to the object confirmation instruction as the associated object information of the at least one associated object.

In some embodiments, the video processing page further includes a preview region, and the apparatus further includes: a preview object determining module, configured to determine a preview object based on the at least one associated object; a preview object information obtaining module, configured to obtain preview object information of the preview object; and a preview updating module, configured to update the target template video displayed in the preview region based on the preview object information.

In some embodiments, the object association operation information displaying unit is configured to display the object association operation information in a target region of the video processing page in response to the confirmation instruction triggered based on the object association confirmation operation information, the target region being located within a preset range located by a position of the target video element corresponding to the object association instruction.

In some embodiments, the association information establishing module 1340 is configured to establish association information between the associated object information and the target video element of the target video.

In some embodiments, the at least one video element includes a subtitle element, and the apparatus further includes: a first subtitle information updating module, configured to obtain updated subtitle information in response to a subtitle updating instruction triggered based on the subtitle element; a first text length information determining module, configured to determine text length information corresponding to the updated subtitle information; a display time module, configured to determine, based on the text length information, a display time of a video frame corresponding to the updated subtitle information in the target template video; and a first target template video updating module, configured to update the target template video based on the display time and the updated subtitle information.

In some embodiments, the at least one video element includes a subtitle element, and the apparatus further includes: a second subtitle information updating module, configured to obtain updated subtitle information in response to a subtitle updating instruction triggered based on the subtitle element; a second text length information determining module, configured to determine text length information corresponding to the updated subtitle information; and a second target template video updating module, configured to update the target template video based on the updated subtitle information in response to the text length information being less than or equal to preset text length information.

In some embodiments, the apparatus further includes: a text length limit information displaying module, configured to display text length upper limit information corresponding to the subtitle element in the video processing page in response to the text length information being greater than the preset text length information.

In some embodiments, the apparatus further includes: a template display page displaying module, configured to display a template display page including template views of a preset number of template videos; in which the video processing page displaying module 1310 is configured to display the video processing page in response to a template selection instruction triggered based on any template view.

In some embodiments, the apparatus further includes: a display updating module, configured to update the target video element displayed in the video processing page based on a preset display format in response to a confirmation instruction triggered based on the object association confirmation operation information.

In some embodiments, the apparatus further includes: an association recognition network obtaining module, configured to obtain an association recognition network corresponding to the at least one associated object in response to the at least one video element being updated; an association recognition module, configured to obtain at least one associated video element by performing association recognition on the at least one video element updated based on the association recognition network; an associated video element displaying module, configured to display the at least one associated video element in the video processing page; and a target video element updating module, configured to update the target video element based on an associated video element corresponding to an association confirmation instruction in response to the association confirmation instruction triggered based on the at least one associated video element.

With respect to the apparatuses in the above embodiments, the specific manners for performing operations for individual modules therein have been described in detail in the embodiments regarding the methods, which will not be elaborated herein.

FIG. 14 is a block diagram of an apparatus for playing a video according to some embodiments of the disclosure. As illustrated in FIG. 14, the apparatus may include the following.

A target video playing module 1410 is configured to play a target video in response to a video play instruction corresponding to the target video.

An associated object information displaying module 1420 is configured to display associated object information of a target associated object associated with a target video element in video frames in response to the video frames that include the target video element in the target video being played; in which, the associated object information is determined based on the association information obtained by the method in the first aspect.

In some embodiments, the apparatus further includes: a first associated object information determining module, configured to determine associated object information of at least one associated object associated with the target video element based on the association information; a user attribute information obtaining module, configured to obtain user attribute information of a target user corresponding to the video play instruction in response to the at least one associated object including at least two objects; and a second associated object information determining module, configured to determine the associated object information of the target associated object from information of the at least two objects based on the user attribute information.

In some embodiments, the apparatus further includes: a third associated object information determining module, configured to use object information of one object as the associated object information of the target associated object in response to the at least one associated object including the one object.

With respect to the apparatuses in the above embodiments, the specific manners for performing operations for individual modules therein have been described in detail in the embodiments regarding the methods, which will not be elaborated herein.

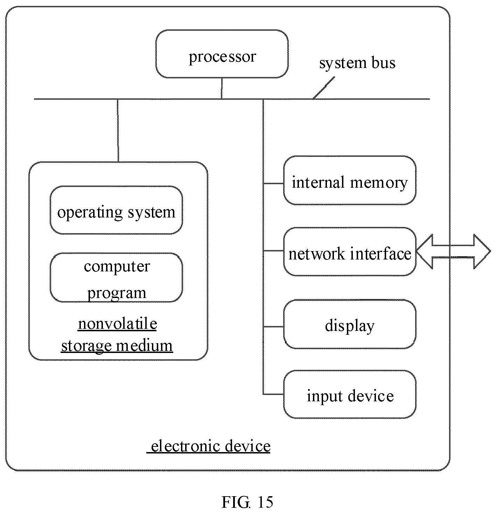

FIG. 15 is a block diagram of an electronic device for processing a video or playing a video according to some embodiments of the disclosure. The electronic device may be a terminal, the internal structure diagram of which may be as illustrated in FIG. 15. The electronic device includes a processor, a memory, a network interface, a display and an input device connected through a system bus. The processor of the electronic device is configured to provide calculation and control capabilities. The memory of the electronic device includes a nonvolatile storage medium and an internal memory. The nonvolatile storage medium stores an operating system and a computer program. The internal memory provides an environment for operations of the operating system and computer program in the nonvolatile storage medium. The network interface of the electronic device is configured to communicate with an external terminal through a network connection. The computer program is executed by the processor to realize the method for processing the video or the method for playing the video. The screen of the electronic device may be a liquid crystal display screen or an electronic ink display screen. The input device of the electronic device may be a touch layer covered on the display, or a button, trackball or touch pad set on the housing of the electronic device. It may also be an external keyboard, touchpad or mouse, etc.

Those skilled in the art may understand that the structure in FIG. 15 is only a block diagram of a part of the structure related to the solutions of the disclosure and may not constitute a limitation on the electronic device to which the solutions of the disclosure is applied. The specific electronic device may include more or less parts than shown in the figure or combine some parts or has a different arrangement of parts.

In some embodiments, an electronic device is provided. The electronic device includes a processor; and a memory for storing instructions executable by the processor. The processor is configured to execute the instructions to perform the method for processing the video or the method for playing the video.

In some embodiments, a computer-readable storage medium is provided. When instructions in the storage medium are executed by a processor of an electronic device, the electronic device is caused to perform the method for processing the video or the method for playing the video.

In some embodiments, a computer program product is provided. When the computer program product is running on a computer, the computer performs the method for processing the video or the method for playing the video.

Those skilled in the art may understand that all or part of processes in the above-mentioned embodiment methods may be implemented by instructing relevant hardware through a computer program. The computer program may be stored in a nonvolatile computer-readable storage medium. When the computer program is executed, it may include procedures of the above-mentioned method embodiments. Any reference to the memory, storage, database or other media used in the embodiments provided in the disclosure may include a nonvolatile and/or volatile memory. The nonvolatile memory may include a read only memory (ROM), a programmable ROM (PROM), an electrically programmable ROM (EPROM), an electrically erasable programmable ROM (EEPROM) or a flash memory. The volatile memory may include a random access memory (RAM) or an external cache memory. As an illustration and not a limitation, RAM is available in many forms, such as static RAM (SRAM), dynamic RAM (DRAM), synchronous DRAM (SDRAM), double data rate SDRAM (DDRSDRAM), enhanced SDRAM (ESDRAM), synchlink DRAM (SLDRAM), memory bus (Rambus) direct RAM (RDRAM), direct memory bus dynamic RAM (DRDRAM), memory bus dynamic RAM (RDRAM), etc.

Those skilled in the art will easily think of other embodiments of the disclosure after considering the specification and practicing the disclosure disclosed herein. The disclosure is intended to cover any variations, uses or adaptive changes of the disclosure. These variations, uses or adaptive changes follow the general principles of the disclosure and include common knowledge or conventional technical means in the technical field that are not disclosed in the disclosure.

It will be appreciated that the disclosure is not limited to the exact construction that has been described above and illustrated in the accompanying drawings, and that various modifications and changes may be made without departing from the scope thereof. It is intended that the scope of the disclosure only be limited by the appended claims.

## Claims

1. A method for processing a video, comprising:
displaying (S201) a video processing page, the video processing page comprises an editing region of a target template video for displaying at least one video element of the target template video;
obtaining (S203) associated object information of at least one associated object of a target video element corresponding to an object association instruction in response to the object association instruction triggered based on any video element;
generating (S205) a target video based on the target template video in response to a video generation instruction; and
establishing (S205) association information between the associated object information and the target video.

2. The method as claimed in claim 1, wherein obtaining (S203) the associated object information of the at least one associated object comprises:
displaying confirmation operation information in the video processing page in response to the object association instruction triggered based on any video element;
displaying operation information in the video processing page in response to a confirmation instruction triggered based on the confirmation operation information; and
obtaining the associated object information of the at least one associated object in response to an object addition instruction triggered based on the operation information.

3. The method as claimed in claim 2, wherein the operation information comprises first operation information, and obtaining the associated object information of the at least one associated object comprises:
obtaining (S601) a matching result by matching the target video element with object information of an object in a preset object set in response to an object addition instruction triggered based on the first operation information;
determining (S603) the at least one associated object from the preset object set based on the matching result; and
obtaining (S605) the associated object information of the at least one associated object.

4. The method as claimed in claim 2, wherein the operation information comprises second operation information, and obtaining the associated object information of the at least one associated object comprises:
displaying (S701) object addition operation information in the operation information in response to an object addition instruction triggered based on the second operation information;
displaying (S703) object information of at least one object associated with the target video element in response to an object addition instruction triggered based on the object addition operation information;
obtaining (S705) object information corresponding to an object confirmation instruction from the object information of the at least one object in response to the object confirmation instruction; and
obtaining (S705) the associated object information of the at least one associated object based on the object information corresponding to the object confirmation instruction.

5. The method as claimed in claim 3 or 4, wherein the video processing page further comprises a preview region, and the method further comprises:
determining a preview object based on the at least one associated object;
obtaining preview object information of the preview object; and
updating the target template video displayed in the preview region based on the preview object information.

6. The method as claimed in any one of claims 2 to 5, wherein displaying the operation information in the video processing page comprises:
displaying the operation information in a target region of the video processing page in response to the confirmation instruction triggered based on the confirmation operation information, wherein, the target region is located within a preset range located by a position of the target video element corresponding to the object association instruction.

7. The method as claimed in any one of claims 1 to 6, wherein establishing (S205) the association information between the associated object information and the target video comprises:
establishing association information between the associated object information and the target video element of the target video.

8. The method as claimed in any one of claims 1 to 7, wherein the at least one video element comprises a subtitle element, and the method further comprises:
obtaining updated subtitle information in response to a subtitle updating instruction triggered based on the subtitle element;
determining text length information corresponding to the updated subtitle information;
determining, based on the text length information, a display time of a video frame corresponding to the updated subtitle information in the target template video; and
updating the target template video based on the display time and the updated subtitle information.

9. The method as claimed in any one of claims 1 to 8, wherein the at least one video element comprises a subtitle element, and the method further comprises:
obtaining updated subtitle information in response to a subtitle updating instruction triggered based on the subtitle element;
determining text length information corresponding to the updated subtitle information; and
updating the target template video based on the updated subtitle information in response to the text length information being less than or equal to preset text length information.

10. The method as claimed in claim 9, further comprising:
displaying text length upper limit information corresponding to the subtitle element in the video processing page in response to the text length information being greater than the preset text length information.

11. The method as claimed in any one of claims 1 to 10, further comprising:
displaying a template display page comprising template views of a preset number of template videos; and
executing displaying the video processing page in response to a template selection instruction triggered based on any template view.

12. The method as claimed in any one of claims 1 to 11, further comprising:
updating the target video element displayed in the video processing page based on a preset display format in response to a confirmation instruction triggered based on the confirmation operation information.

13. The method as claimed in any one of claims 1 to 12, further comprising:
obtaining an association recognition network corresponding to the at least one associated object in response to the at least one video element being updated;
obtaining at least one associated video element by performing association recognition on the at least one video element updated based on the association recognition network;
displaying the at least one associated video element in the video processing page; and
updating the target video element based on an associated video element corresponding to an association confirmation instruction in response to the association confirmation instruction triggered based on the at least one associated video element.

14. An apparatus for processing a video, comprising:
a video processing page displaying module (1310), configured to display a video processing page, the video processing page comprises an editing region of a target template video for displaying at least one video element of the target template video;
an associated object information obtaining module (1320), configured to obtain associated object information of at least one associated object of a target video element corresponding to an object association instruction in response to the object association instruction triggered based on any video element;
a target video generating module (1330), configured to generate a target video based on the target template video in response to a video generation instruction; and
an association information establishing module (1340), configured to establish association information between the associated object information and the target video.

15. A non-transitory computer-readable storage medium having stored therein instructions that, when executed by a processor of an electronic device, causes the electronic device to perform the method as claimed in any one of claims 1 to 13.
